# EUROPÄISCHE PATENTANMELDUNG

(11) **EP 4 678 289 A1**
(43) Veröffentlichungstag der Anmeldung: **14.01.2026**
(21) Anmeldenummer: 25188895.4
(22) Anmeldetag: 10.07.2025
(51) Int. Cl.: B01L 7/00, B01L 9/04

(54) **TEMPERIERVORRICHTUNG, PROBENVORBEREITUNGSSYSTEM UND VERFAHREN ZUR VORBEREITUNG EINER PROBE**

(30) Priorität: 10.07.2024 LU 507719
(71) Anmelder: ValUse Laboratory Instruments UG (haftungsbeschränkt), 68219 Mannheim (DE)
(72) Erfinder: Croissant, Christian, 68219 Mannheim (DE)
(74) Vertreter: Habermann Intellectual Property Partnerschaft von Patentanwälten mbB

(57) **Zusammenfassung**

Die Erfindung betrifft eine Temperiervorrichtung (1) für einen Probenbehälter. Die Temperiervorrichtung (1) weist zwei Temperierelemente (2) auf. Jedes Temperierelement (2) weist eine Temperierfläche (3) auf. Die beiden Temperierflächen (3) sind einander gegenüberliegend ausgerichtet. Die Temperierelemente (2) können mit Hilfe eines Verlagerungsmechanismus (4) der Temperiervorrichtung (1) in einer Verlagerungsrichtung (5) aufeinander zu und entgegen der Verlagerungsrichtung (5) voneinander weg bewegt werden, sodass die Temperierflächen (3) mit dem Probenbehälter in Anlage bringbar sind.

## Beschreibung

Die Erfindung betrifft eine Temperiervorrichtung für einen Probenbehälter, ein Probenvorbereitungssystem und ein Verfahren zur Vorbereitung einer Probe.

Bei Versuchen in chemischen und biologischen Laboratorien werden Proben mit verschiedenen Verfahren unter Gasatmosphäre oder im Vakuum über definierte Zeiträume chemischen oder physikalisch-chemischen Reaktionen wie Gefriertrocknen, Backen, Kochen oder Destillieren ausgesetzt. Die Reaktionen können über oder unter Raumtemperatur ablaufen, weshalb Probenbehälter wie beispielsweise Reagenzgläser, Zentrifugenröhrchen, Bechergläser, Objektträger usw. bisher in speziell dafür konstruierten Apparaturen beheizt oder gekühlt wurden. Jede dieser Apparaturen ist auf eine eigene Temperaturregelung angewiesen. Dies führt dazu, dass für einen mehrstufigen Prozess mehrere Apparate eingesetzt werden müssen.

Automatisierungen werden häufig nur von industriellen Systemen auf den Labormaßstab herunterskaliert, so dass diese Art der Nutzung ständig verfügbares Expertenwissen für Umbauten erfordert und damit an Flexibilität einbüßt. Die alternative manuelle Bedienung bindet die Nutzer häufig für die Dauer des Prozesses an das jeweilige Gerät, um die Prozesse zu kontrollieren und nach vorgegebener Zeit zu beenden. Darüber hinaus können spezielle Methoden oder Probenträger selten hergestellte und daher teure Spezialgeräte erfordern, die nur einmal vorgehalten werden und gegebenenfalls eine Koordination mit anderen Nutzern und einen Wechsel des Arbeitsplatzes erfordern.

KR 2006 0098160 A beschreibt eine zylindrische Versuchsvorrichtung zum Erwärmen eines Prüfkörpers, die eine zerstörungsfreie Messung fehlerhafter Bereiche, Verformungen und Verschiebungen ermöglicht. Dabei wird der Prüfkörper vollständig erwärmt, während lediglich der zu untersuchende Abschnitt in Drehung versetzt wird. Die Vorrichtung umfasst ein rundes Heizelement, das im Inneren der Zylinderstruktur angeordnet ist und eine zur Vorderseite hin offene Bauweise aufweist. An der Innenumfangsfläche dieses Heizelements ist eine Wärmeerzeugungseinheit angebracht. Zur Regelung des Öffnungs- und Schließwinkels der Vorderseite dient eine steuerbare Klappeneinheit, die beidseitig gelenkig mit dem äußeren Umfang des Heizelements verbunden ist. Zudem ist innerhalb des Heizelements ein Drehtisch angeordnet, auf dem der Prüfkörper drehbar gelagert ist.

Aus CN 114 247 722 A ist ein Lüftungs-Experimentierschrank bekannt, der eine einstellbare Temperatur- und Luftmengenregelung ermöglicht. Der Schrank umfasst eine Prüfkammer, an deren einer Seitenwand eine Lufteinlassleitung sowie eine davon beabstandete Luftauslassleitung angeordnet sind. Die jeweils gegenüberliegenden Enden der Lufteinlass- und Luftauslassleitung sind mit einem Temperaturregelgehäuse verbunden. An den dem Temperaturregelgehäuse zugewandten Enden der Luftleitungen ist jeweils eine Öffnungs- und Schließeinrichtung vorgesehen, die der gezielten Öffnung oder Schließung der entsprechenden Leitung dient. Eine zusätzliche Verstelleinrichtung ermöglicht die Anpassung der Öffnungsweiten beider Leitungen.

US 2,546,770 A offenbart ein Prüfgerät, das zur Untersuchung von Werkstoffproben unter kontrollierten Temperaturbedingungen dient. Die Vorrichtung umfasst eine beheizbare Kammer zur Aufnahme des Prüfkörpers sowie eine Halterungseinrichtung, mit der die Probe fixiert und mechanisch beansprucht werden kann. Die Kammer ist mit einem Heizelement ausgestattet, das eine gleichmäßige Temperaturverteilung innerhalb des Prüfvolumens ermöglicht. Zur gezielten thermischen Beaufschlagung sowie zur Durchführung mechanischer Belastungstests können Temperatur und ggf. auch andere Versuchsbedingungen während der Prüfung variiert werden. Die Vorrichtung erlaubt eine gleichzeitige thermische und mechanische Beeinflussung der Probe, um deren Verhalten unter praxisnahen Belastungsszenarien zu analysieren.

In dem bekannten Stand der Technik zeigen sich verschiedene technische Mängel im Hinblick auf die flexible und automatisierbare Temperierung von Proben im Labormaßstab. So sind die bekannten Vorrichtungen häufig auf bestimmte Probenformen oder Versuchsbedingungen festgelegt und lassen sich nur eingeschränkt an unterschiedlich ausgestaltete Probenbehälter anpassen. Zudem erfolgt die Temperaturführung meist innerhalb geschlossener Kammern oder über konvektive Luftströme, wodurch eine direkte, flächige und kontaktbasierte Temperierung nicht möglich ist. Automatisierungslösungen beruhen vielfach auf industriellen Großsystemen, die lediglich herunterskaliert wurden und daher in der Praxis eine umständliche Bedienung oder spezielles Expertenwissen für Umbauten erfordern. Hinzu kommt, dass mehrere Geräte für verschiedene Prozessschritte benötigt werden, was eine aufwändige Koordination und oftmals einen Wechsel des Arbeitsplatzes nach sich zieht. Insgesamt fehlt es im Stand der Technik an einer modularen, universell einsetzbaren Temperiervorrichtung, die eine prozesssichere und an unterschiedliche Probenformate anpassbare Temperaturbehandlung erlaubt und sich zugleich in automatisierte Laborprozesse integrieren lässt.

Vor diesem Hintergrund besteht die Aufgabe der Erfindung darin, eine Temperiervorrichtung, ein Probenvorbereitungssystem bereitzustellen, mit dem eine kontaktbasierte, temperaturvariable und zugleich einfach automatisierbare Temperierung von Proben möglich ist.

Diese Aufgabe wird erfindungsgemäß durch eine Temperiervorrichtung für einen Probenbehälter gelöst, wobei die Temperiervorrichtung zwei Temperierelemente aufweist, wobei jedes Temperierelement eine Temperierfläche aufweist, wobei die beiden Temperierflächen einander gegenüberliegend ausgerichtet sind, wobei die Temperierelemente mit Hilfe eines Verlagerungsmechanismus der Temperiervorrichtung in einer Verlagerungsrichtung aufeinander zu und entgegen der Verlagerungsrichtung voneinander weg bewegt werden können, sodass die Temperierflächen mit dem Probenbehälter in Anlage bringbar sind und wobei eine Temperatur der beiden Temperierelemente unabhängig voneinander vorgebbar ist. Das hier beschriebene System basiert auf zwei unabhängig positiv oder negativ wirkenden Temperierelementen mit konzertierter Stoffübertragung zur Automatisierung von verschiedenen Verfahren im Labormaßstab. Die jeweiligen Gefäße (Reaktoren) werden über die dafür vorgesehenen Probenbehälter mit den Temperierelementen in Kontakt gebracht. Die Ausgestaltung der Temperiervorrichtung und ihre Bedienung sind immer gleich, wodurch die Einarbeitung nur einmal erfolgen muss. Für die Bearbeitung von Proben mit verschiedenen Parametern in mehrstufigen Prozessen genügt es somit, den Probenbehälter zu tauschen und das jeweilige Programm zu wählen, ohne die Temperiervorrichtung bzw. den Arbeitsort zu wechseln.

Ein besonderer Vorteil der erfindungsgemäßen Temperiervorrichtung besteht darin, dass nicht nur eine kontaktbasierte Temperierung erfolgt, sondern dass diese darüber hinaus gezielt geregelt werden kann. Anders als bei konvektiven Kühlsystemen, bei denen die Abkühlung lediglich durch Umgebungsluft oder Kühlwasser erfolgt, erlaubt das vorliegende System eine gezielte Führung der Temperaturkurve. So kann eine Probe beispielsweise nicht abrupt auf Umgebungstemperatur heruntergekühlt werden, sondern in einem kontrollierten Verlauf gehalten und temperiert werden. Das gleiche gilt selbstverständlich für die Erwärmung. Diese Regelbarkeit ist insbesondere bei thermosensiblen Prozessen von erheblichem Vorteil.

Die Verwendung des erfindungsgemäßen Verlagerungsmechanismus erlaubt es die Temperierelemente an unterschiedlich ausgestaltete Probenbehälter anzulegen. Vorteilhafterweise weisen die Probenbehälter auf einander gegenüberliegenden Seiten angeordnete und an eine Formgebung der Temperierflächen angepasste Temperiergegenflächen auf, wobei die Temperiervorrichtung in eine Öffnungsstellung und eine Schließstellung verlagerbar ist und wobei der Probenbehälter mit den Temperiergegenflächen an den Temperierflächen der Temperierelemente in der Schließstellung anliegt.

Die Temperierelemente sind vorteilhafterweise so ausgestaltet, dass die Probenbehälter mit den Temperierelementen gekühlt oder beheizt werden können. Zu Steuerung der Temperierung der Probenbehälter ist vorteilhafterweise ein Automatisierungssystem vorgesehen, mit dem die Temperatur der Temperierelemente bzw. der Temperierflächen gesteuert oder geregelt werden kann.

Vorteilhafterweise ist erfindungsgemäß vorgesehen, dass die Temperierflächen eben ausgestaltet sind. Auf diese Weise können die Temperierflächen und die Temperiergegenflächen besonders einfach einander angepasst werden. Es ist aber auch möglich und erfindungsgemäß vorgesehen, dass die Temperierflächen beispielsweise wellig ausgestaltet sind.

Vorteilhafterweise ist erfindungsgemäß vorgesehen, dass die beiden Temperierflächen parallel zueinander ausgerichtet sind. Es ist aber auch möglich und erfindungsgemäß vorgesehen, dass die Temperierflächen beispielsweise V-förmig zueinander ausgerichtet sind.

Vorteilhafterweise ist erfindungsgemäß vorgesehen, dass es sich bei dem Verlagerungsmechanismus um eine Hebelmechanismus handelt. Es ist aber auch möglich und erfindungsgemäß vorgesehen, dass es sich bei dem Verlagerungsmechanismus beispielsweise um hydraulische Stempel handelt.

Vorteilhafterweise ist erfindungsgemäß vorgesehen, dass der Hebelmechanismus zwei Parallellenkereinrichtungen aufweist, wobei jede Parallellenkereinrichtung einen Temperierelementhalter aufweist an dem jeweils eines der Temperierelemente angeordnet ist, wobei jede Parallellenkereinrichtung zwei parallel zueinander ausgerichtete und an jeweils zwei voneinander beabstandeten Schwenkstellen schwenkbar gelagerte Parallellenkerhebel aufweist, wobei erste Schwenkstellen jedes Parallellenkerhebels einer Parallellenkereinrichtung an einem Parallellenkerabschnitt des Temperierelementhalters der jeweiligen Parallellenkereinrichtung schwenkbar gelagert sind wobei zweite Schwenkstellen aller Parallellenkerhebel an einem gemeinsamen Verlagerungselement schwenkbar gelagert sind, und wobei das Verlagerungselement ausschließlich quer zu der Verlagerungsrichtung der Temperierflächen verlagerbar ist. Durch die beiden derart gekoppelten Parallelogrammführungen wird erreicht, dass sich die Temperierelementhalter gleichlaufend aufeinander zu und voneinander wegbewegen können und gleichzeitig die parallele Ausrichtung der Temperierflächen zueinander erhalten bleibt. Vorteilhafterweise ist das Verlagerungselement ausschließlich orthogonal zu der Verlagerungsrichtung verlagerbar.

Bei einer besonders vorteilhaften Ausgestaltung der erfindungsgemäßen Temperiervorrichtung ist vorgesehen, dass die erste Schwenkstelle und die zweite Schwenkstelle aller Parallellenkerhebel jeweils den gleichen Abstand zueinander haben. Auf diese Weise kann die Anzahl der für die Herstellung des Hebelmechanismus erforderlichen Bauteiltypen verringert werden.

Um zu erreichen, dass das Verlagerungselement ausschließlich quer zu der Verlagerungsrichtung verlagerbar ist, ist erfindungsgemäß vorgesehen, dass das Verlagerungselement an einem Zwangsführungselement der Parallellenkereinrichtung zwangsgeführt ist. Beispielsweise können das Verlagerungselement und das Zwangsführungselement erfindungsgemäß als Schwalbenschwanzführung ausgestaltet sein.

Zur Betätigung des Verlagerungsmechanismus ist erfindungsgemäß vorgesehen, dass sich mindestens ein Parallellenkerhebel in einem Betätigungsabschnitt von der zweiten Schwenkstelle über die erste Schwenkstelle hinaus erstreckt und einen Betätigungshebel bildet.

Vorteilhafterweise ist erfindungsgemäß vorgesehen, dass der Betätigungshebel in dem Betätigungsabschnitt schwenkbar an einem Betätigungselement gelagert ist und dass das Betätigungselement schwenkbar an einem Strukturelement der Temperiervorrichtung gelagert ist. Auf diese Weise ist eine einfachere Betätigung durch die so erreichte Hebelwirkung möglich. Bei dem Strukturelement handelt es sich um den den Hebelmechanismus tragenden und bei bestimmungsgemäßer Verwendung der Temperiervorrichtung feststehenden bzw. festgelegten Teil der Temperiervorrichtung. Unter anderem ist auch das Zwangsführungselement Bestandteil des Strukturelements.

Vorteilhafterweise ist erfindungsgemäß vorgesehen, dass eine Temperatur der beiden Temperierelemente unabhängig voneinander vorgebbar ist. Erfindungsgemäß kann der Probenbehälter mit Hilfe der Temperierelemente sowohl beheizt als auch gekühlt werden.

Um den Hebelmechanismus automatisiert betätigen zu können, ist erfindungsgemäß vorgesehen, dass das Verlagerungselement mit einer Antriebsvorrichtung in Wirkverbindung bringbar ist, um eine Verlagerung der Temperierelemente mit Hilfe der Antriebsvorrichtung zu ermöglichen. Vorteilhafterweise handelt es sich bei der Antriebsvorrichtung um einen elektromotorischen Antrieb.

Die Steuerung der Temperierung kann automatisiert erfolgen, beispielsweise durch ein entsprechend programmiertes Prozessleitsystem. Alternativ kann der Prozess auch manuell initialisiert werden, wobei die eigentliche Temperierung und Stoffübertragung automatisiert abläuft. Somit ist auch bei manuellem Start eine "konzertierte" Prozessführung im Sinne einer zeitlich abgestimmten, reproduzierbaren Abfolge gewährleistet.

Die Erfindung betrifft auch ein Probenvorbereitungssystem mit einer Temperiervorrichtung gemäß einem der voranstehenden Ansprüche und mit mindestens einem Probenbehälter, wobei der Probenbehälter auf einander gegenüberliegenden Seiten angeordnete aufweist, wobei eine Formgebung jeder Temperiergegenfläche an eine Formgebung der der jeweiligen Temperiergegenfläche zugeordneten Temperierfläche der Temperiervorrichtung angepasst ist, wobei die Temperiervorrichtung in eine Öffnungsstellung und eine Schließstellung verlagerbar ist und wobei der Probenbehälter mit den Temperiergegenflächen an den Temperierflächen der Temperierelemente in der Schließstellung anliegt. Vorteilhafterweise weist das Probenvorbereitungssystem mehrere Probenbehälter unterschiedlicher Größe auf.

Bei einer bevorzugten Ausführungsform des Probenvorbereitungssystems ist vorgesehen, dass die beiden Temperierelemente gezielt mit unterschiedlichen Temperaturen betrieben werden. Hierdurch lässt sich ein kontrollierter Temperaturgradient über die Länge oder Dicke des Probenbehälters erzeugen. Die Temperaturdifferenz kann je nach Anwendung konstant gehalten oder dynamisch verändert werden, um beispielsweise eine gerichtete Stoffbewegung innerhalb der Probe anzuregen oder Temperaturzonen mit verschiedenen physikalisch-chemischen Bedingungen zu erzeugen.

Die unabhängige Temperierbarkeit beider Temperierelemente erlaubt es zudem, asymmetrische Prozessprofile abzubilden, wie sie etwa bei der Sublimation, der Gefriertrocknung oder der fraktionierten Reaktion verschiedener Probenschichten erforderlich sind.

Die Erfindung betrifft auch ein Verfahren zur Vorbereitung einer Probe unter Verwendung des voranstehend beschriebenen Probenvorbereitungssystems, wobei zunächst eine Probe in dem Probenbehälter angeordnet wird, wobei anschließend der Probenbehälter zwischen den Temperierflächen der Temperiervorrichtung angeordnet wird, wobei anschließend die Temperiervorrichtung in die Schließstellung verlagert wird, wobei anschließend die Probe mit der Temperiervorrichtung temperiert wird und wobei anschließend die Temperiervorrichtung in die Öffnungsstellung verlagert wird und der Probenbehälter aus der Temperiervorrichtung entnommen wird.

In einer bevorzugten Ausführungsform erfolgt die Temperierung der Probe im zeitlich abgestimmten Zusammenspiel mit einer Stoffübertragung an oder aus dem Probenbehälter. Die Temperiervorrichtung ist hierzu vorteilhafterweise mit einer Steuerungseinrichtung gekoppelt, die sowohl die Temperierparameter (Temperatur, Haltezeit, Gradientenführung) als auch den zeitlichen Ablauf von Stoffübertragungen - etwa durch Evakuierung, Spülen oder Beladen mit Prozessgasen - koordiniert. Die Stoffübertragung kann über in den Probenbehälter integrierte Schnittstellen, Ventile oder Leitungen erfolgen, die mit externen Medienquellen verbunden sind. Hierdurch lassen sich gezielt definierte Prozessbedingungen erzeugen, beispielsweise ein kontrollierter Phasenwechsel, eine Extraktion oder eine Reaktion unter isothermen Bedingungen.

Weitere vorteilhafte Ausgestaltung der erfindungsgemäßen Temperiervorrichtung werden anhand von in der Zeichnung dargestellten Ausführungsbeispielen näher erläutert.

### Es zeigen:

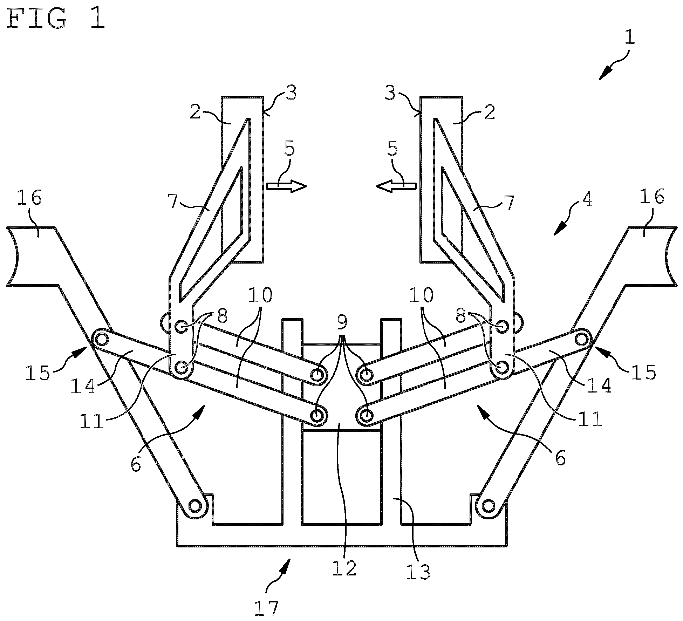

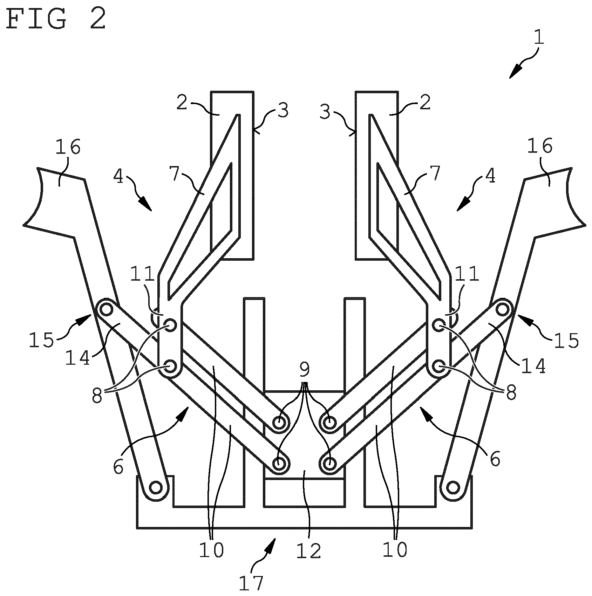

Figuren 1 und 2 eine erfindungsgemäße Temperiervorrichtung, wobei die Temperiervorrichtung in Figur 1 in einer Offenstellung und in Figur 2 in einer Schließstellung dargestellt ist.

In den Figuren 1 und 2 ist eine Temperiervorrichtung 1 für einen Probenbehälter schematisch dargestellt. Die Temperiervorrichtung 1 weist zwei Temperierelemente 2 auf. Jedes Temperierelement 2 weist eine ebene Temperierfläche 3 auf. Die beiden Temperierflächen 3 sind parallel zueinander und einander gegenüberliegend ausgerichtet. Die Temperierelemente 2 können mit Hilfe eines als Hebelmechanismus ausgestalteten Verlagerungsmechanismus 4 der Temperiervorrichtung 1 in einer Verlagerungsrichtung 5aufeinander zu und entgegen der Verlagerungsrichtung 5 voneinander weg bewegt werden, sodass die Temperierflächen 3 mit dem Probenbehälter in Anlage bringbar sind.

Der Verlagerungsmechanismus 4 weist zwei Parallellenkereinrichtungen 6 auf. Jede Parallellenkereinrichtung 6 weist einen Temperierelementhalter 7 auf, an dem jeweils eines der Temperierelemente 2 angeordnet ist.

Jede Parallellenkereinrichtung 6 weist zwei parallel zueinander ausgerichtete und an jeweils zwei voneinander beabstandeten Schwenkstellen 8, 9 schwenkbar gelagerte Parallellenkerhebel 10 auf. Erste Schwenkstellen 8 jedes Parallellenkerhebels 10 einer Parallellenkereinrichtung 6 sind an einem Parallellenkerabschnitt 11 des Temperierelementhalters 7 der jeweiligen Parallellenkereinrichtung 6 schwenkbar gelagert. Zweite Schwenkstellen 9 aller Parallellenkerhebel 10 sind an einem gemeinsamen Verlagerungselement 12 schwenkbar gelagert. Das Verlagerungselement 12 ist an einem Zwangsführungselement 13 der Parallellenkereinrichtung 6 zwangsgeführt und ausschließlich quer zu der Verlagerungsrichtung 5 der Temperierflächen 3 verlagerbar. Die erste Schwenkstelle 8 und die zweite Schwenkstelle 9 aller Parallellenkerhebel 10 haben jeweils den gleichen Abstand zueinander.

Jeweils ein Parallellenkerhebel 10 jeder Parallellenkereinrichtung 6 erstreckt sich in einem Betätigungsabschnitt 14 von der zweiten Schwenkstelle 9 über die erste Schwenkstelle 8 hinaus und bildet einen Betätigungshebel 15. Jeder Betätigungshebel 15 ist in dem Betätigungsabschnitt 14 schwenkbar an einem Betätigungselement 16 gelagert, wobei das Betätigungselement 16 schwenkbar an einem Strukturelement 17 der Temperiervorrichtung 1 gelagert ist. Bei dem Strukturelement 17 handelt es sich um das bezüglich des Hebelmechanismus 4 feststehende Teil der Temperiervorrichtung 1.

## Patentansprüche

1. Temperiervorrichtung (1) für einen Probenbehälter, wobei die Temperiervorrichtung (1) zwei Temperierelemente (2) aufweist, wobei jedes Temperierelement (2) eine Temperierfläche (3) aufweist, wobei die beiden Temperierflächen (3) einander gegenüberliegend ausgerichtet sind, wobei die Temperierelemente (2) mit Hilfe eines Verlagerungsmechanismus (4) der Temperiervorrichtung (1) in einer Verlagerungsrichtung (5) aufeinander zu und entgegen der Verlagerungsrichtung (5) voneinander weg bewegt werden können, sodass die Temperierflächen (3) mit dem Probenbehälter in Anlage bringbar sind und wobei eine Temperatur der beiden Temperierelemente (2) unabhängig voneinander vorgebbar ist.

2. Temperiervorrichtung (1) gemäß Anspruch 1, **dadurch gekennzeichnet, dass** die Temperierflächen (3) eben ausgestaltet sind.

3. Temperiervorrichtung (1) gemäß Anspruch 1 oder Anspruch 2, **dadurch gekennzeichnet, dass** die beiden Temperierflächen (3) parallel zueinander ausgerichtet sind.

4. Temperiervorrichtung (1) gemäß einem der voranstehenden Ansprüche, **dadurch gekennzeichnet, dass** es sich bei dem Verlagerungsmechanismus (4) um einen Hebelmechanismus handelt.

5. Temperiervorrichtung (1) gemäß Anspruch 4, **dadurch gekennzeichnet, dass** der Hebelmechanismus (4) zwei Parallellenkereinrichtungen (6) aufweist, wobei jede Parallellenkereinrichtung (6) einen Temperierelementhalter (7) aufweist an dem jeweils eines der Temperierelemente (2) angeordnet ist, wobei jede Parallellenkereinrichtung (6) zwei parallel zueinander ausgerichtete und an jeweils zwei voneinander beabstandeten Schwenkstellen (8, 9) schwenkbar gelagerte Parallellenkerhebel (10) aufweist, wobei erste Schwenkstellen (8) jedes Parallellenkerhebels (10) einer Parallellenkereinrichtung (6) an einem Parallellenkerabschnitt (11) des Temperierelementhalters (7) der jeweiligen Parallellenkereinrichtung (6) schwenkbar gelagert sind, wobei zweite Schwenkstellen (9) aller Parallellenkerhebel (10) an einem gemeinsamen Verlagerungselement (12) schwenkbar gelagert sind.

6. Temperiervorrichtung (1) gemäß Anspruch 5, **dadurch gekennzeichnet, dass** das Verlagerungselement (12) ausschließlich quer zu der Verlagerungsrichtung (5) der Temperierflächen (3) verlagerbar ist.

7. Temperiervorrichtung (1) gemäß Anspruch 5 oder Anspruch 6, **dadurch gekennzeichnet, dass** die erste Schwenkstelle (8) und die zweite Schwenkstelle (9) aller Parallellenkerhebel (10) jeweils den gleichen Abstand zueinander haben.

8. Temperiervorrichtung (1) gemäß einem der Ansprüche 5 bis 7, **dadurch gekennzeichnet, dass** das Verlagerungselement (12) an einem Zwangsführungselement (13) der Parallellenkereinrichtung (6) zwangsgeführt ist.

9. Temperiervorrichtung (1) gemäß einem der Ansprüche 5 bis 8, **dadurch gekennzeichnet, dass** sich mindestens ein Parallellenkerhebel (10) in einem Betätigungsabschnitt (14) von der zweiten Schwenkstelle (9) über die erste Schwenkstelle (8) hinaus erstreckt und einen Betätigungshebel (15) bildet.

10. Temperiervorrichtung (1) gemäß Anspruch 9, **dadurch gekennzeichnet, dass** der Betätigungshebel (15) in dem Betätigungsabschnitt (14) schwenkbar an einem Betätigungselement (16) gelagert ist und dass das Betätigungselement (16) schwenkbar an einem Strukturelement (17) der Temperiervorrichtung (1) gelagert ist.

11. Temperiervorrichtung (1) gemäß einem der voranstehenden Ansprüche, **dadurch gekennzeichnet, dass** das Verlagerungselement (12) mit einer Antriebsvorrichtung in Wirkverbindung bringbar ist, um eine Verlagerung der Temperierelemente (2) mit Hilfe der Antriebsvorrichtung zu ermöglichen.

12. Probenvorbereitungssystem mit einer Temperiervorrichtung (1) gemäß einem der voranstehenden Ansprüche und mit mindestens einem Probenbehälter, wobei der Probenbehälter auf einander gegenüberliegenden Seiten angeordnete Temperiergegenflächen aufweist, wobei eine Formgebung jeder Temperiergegenfläche an eine Formgebung der der jeweiligen Temperiergegenfläche zugeordneten Temperierfläche (3) der Temperiervorrichtung (1) angepasst ist, wobei die Temperiervorrichtung (1) in eine Öffnungsstellung und eine Schließstellung verlagerbar ist und wobei der Probenbehälter mit den Temperiergegenflächen an den Temperierflächen (3) der Temperierelemente (2) in der Schließstellung anliegt.

13. Probenvorbereitungssystem gemäß einem der voranstehenden Ansprüche, **dadurch gekennzeichnet, dass** die beiden Temperierelemente unterschiedliche Temperaturen aufweisen, um gezielt einen Temperaturgradienten im Probenbehälter zu erzeugen.

14. Verfahren zur Vorbereitung einer Probe unter Verwendung des Probenvorbereitungssystems gemäß Anspruch 12 oder 13, wobei zunächst eine Probe in dem Probenbehälter angeordnet wird, wobei anschließend der Probenbehälter zwischen den Temperierflächen (3) der Temperiervorrichtung (1) angeordnet wird, wobei anschließend die Temperiervorrichtung (1) in die Schließstellung verlagert wird, wobei anschließend die Probe mit der Temperiervorrichtung (1) temperiert wird und wobei anschließend die Temperiervorrichtung (1) in die Öffnungsstellung verlagert wird und der Probenbehälter aus der Temperiervorrichtung (1) entnommen wird.

15. Verfahren gemäß Anspruch 14, **dadurch gekennzeichnet, dass** die Temperierung der Probe im zeitlich abgestimmten Zusammenspiel mit einer Stoffübertragung an oder aus dem Probenbehälter erfolgt.
